# EUROPEAN PATENT APPLICATION

(11) **EP 3 407 306 A1**
(43) Date of publication of application: **28.11.2018**
(21) Application number: 17172395.0
(22) Date of filing: 23.05.2017
(51) Int. Cl.: G07B 15/02, G01C 21/00, G06Q 10/04, G06F 17/27, G06F 17/30

(54) **METHOD FOR DEDUPLICATION OF PUBLIC TRANSPORT STATIONS IN OVERLAPPING GEOGRAPHICAL AREAS AND CORRESPONDING ROUTE PLANNER OR TICKETING SYSTEM**

(71) Applicant: Siemens Aktiengesellschaft, 80333 München (DE)
(72) Inventor: Katrych, Sergii, 81737 München (DE)

(57) **Abstract**

A method for deduplication of public transport stations in overlapping geographical areas of two mobility providers, wherein a semantic similarity index between the station names of the two mobility providers and a geographical distance between the geographical coordinates of the two public transport stations coming from the two mobility providers is calculated and wherein one of the two station names of the two public transport stations coming from the two mobility providers is removed, if the calculated semantic similarity index is exceeding a given threshold and the calculated geographical distance is below a given minimum distance.

This method is more versatile and reliable than other methods and is easy to implement, e. g. as a cloud based service, and can be advantageously used in route planners or ticketing systems.

## Description

### Technical Field

The present disclosure relates to the field of services like route planners or ticketing systems for public transport covering a plurality of different local public transport services with its own naming for specific stations or own station IDs.

A service that helps to find the best way to travel from one location to another location, e. g. Zurich to Munich, using public transport has the difficulty that at least the areas of the starting point and the destination have their own local public transport services and own databases of public transport stations that belongs to the service area of the respective local public transport provider, wherein each local public transport service uses its own naming for specific stations and own station IDs. In other words, there is no global index or global IDs for the public transport stations.

This leads to the problem that the service areas of neighboring service providers, for example Switzerland Bahn and MVV/MVG of Munich, have overlapping areas and the traveler or user of such a service will often get duplicated stations resulting from two different databases.

To make things worse, there are not only overlapping areas when travelling from one country to another neighboring country but there are even a lot of overlapping areas of two providers within the same country, e. g. Germany.

In many specific use cases there is no way around to use the only one service provider to avoid duplications.

Further, there is no easy way to merge the lists of stations because station IDs resp. station names are different. Even geographical coordinates of the respective stations are not exactly the same among the service providers.

### Background Art

One known approach is to split the geographical areas into squares or rectangles and then to assign each rectangle to a specific transport service provider that will be considered as a primary one, but this by far is not covering all of the use-cases. Due to the fact that real geographical areas nearly never have straight boarders that can follow the shape of rectangle boarders, there will be still some overlapping areas within one rectangle.

Therefore, there is a need for a method for deduplication of public transport stations in overlapping geographical areas, which is reliable and easy to implement and which is avoiding the above mentioned disadvantages as far as possible.

According to the invention this need is settled by a method as it is defined by the features of independent claim 1. Preferred embodiments, an appropriate computer program product and a corresponding route planner or ticketing system are subject of the dependent claims.

### Summary of the invention

In particular, the gist of the invention is the following: A method for deduplication of public transport stations in overlapping geographical areas of two mobility providers, wherein a semantic similarity index between the station names of the two mobility providers and a geographical distance between the geographical coordinates of the two public transport stations coming from the two mobility providers is calculated and wherein one of the two station names of the two public transport stations coming from the two mobility providers is removed, if the calculated semantic similarity index is exceeding a given threshold and the calculated geographical distance is below a given minimum distance. This method more versatile and reliable than other methods and is easy to implement, e. g. as a cloud based service, and can be advantageously used in route planners or ticketing systems.

### Brief Description of the Drawings

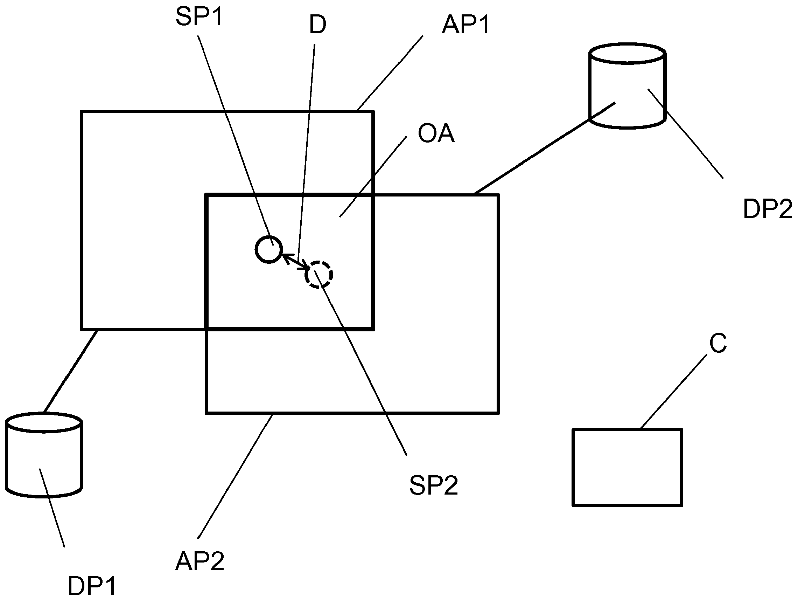

The method and the computer program according to the invention as well as the corresponding route planner or ticketing system are described in more detail herein below by way of an exemplary embodiment and with reference to the attached drawing.

### Detailed description of exemplary embodiments

The drawing shows a schematic diagram illustrating an embodiment of the invention, wherein a service area **AP1** of a first mobility provider and a service area **AP2** of a second mobility provider have an overlapping service area **OA,** wherein the first mobility provider has description data **DP1** including stations, e. g. **SP1,** at least each with its station name and geographic location, wherein the second mobility provider has description data **DP2** also including stations, e. g. **SP2,** at least each with its station name and geographic location and wherein actually the same station can have a different representations **SP1** and **SP2** in terms of station name and/or geographic location in the description data **DP1, DP2** of both providers.

Assumed that the different representations **SP1** and **SP2** of actually one common station show a geographic distance **D** and a different station name, a smart device or computer **C** which is using the services of both mobility providers for the overlapping area **OA** would normally use or display two different stations despite the fact that there is only one station in the real world.

The invention filters out or removes such artificial extra stations, e. g. the station **SP2,** by the following steps:

This invention utilizes linguistic approach and is using an algorithm of finding Semantic Similarity between two phrases. First, a semantic similarity index between the station names of the two mobility providers has to be calculated.

Semantic similarity is a metric defined over a set of documents or terms, where the idea of distance between them is based on the likeness of their meaning or semantic content. Computationally, semantic similarity can be estimated by defining a topological similarity, by using ontologies to define the distance between terms. Co-occurrences can be used to retrieve the semantic similarity between phrases. The similarities are based on the statistical analysis of very large text collections. Such an algorithm is known as "Latent Semantic Index" (LSI).

One simple example how to typically calculate this LSI respectively Semantic Similarity Index is given by the following little example or tutorial
http://www1.se.cuhk.edu.hk/∼seem5680/lecture/LSI-Eg.pdf
http://manuel.midoriparadise.com/public html/svd-lsi-tutorial.pdf
each using the resource "Information Retrieval: Algorithms and Heuristics by David A. Grossman and Ophir Frieder. Springer, 2nd Edition, 2004.

Then, after receiving two representations **SP1, SP2** of public transport stations coming from the two mobility providers, the geographical distance **D** between the geographical coordinates of these two public transport stations is calculated.

Finally, one of the two representations, e. g. **SP2,** of the two public transport stations coming from the two mobility providers is removed, if the calculated semantic similarity index is exceeding a given threshold and the calculated geographical distance is below a given minimum distance.

Thereby the given threshold of the semantic similarity index is typically chosen at a value of at least 3/4 and the accuracy of the geographical distance **D** and the given minimum distance is typically on a meter level.

The functionality of the inventive method can be, e. g. advantageously used in route planner or ticketing systems.

## Claims

1. Method for deduplication of public transport stations in overlapping geographical areas of two mobility providers comprising
- calculating a semantic similarity index between the station names of the two mobility providers;
- receiving two names for public transport stations coming from the two mobility providers;
- calculating a geographical distance between the geographical coordinates of the two public transport stations coming from the two mobility providers and
- removing one of the two station names of the two public transport stations coming from the two mobility providers, if the calculated semantic similarity index is exceeding a given threshold and the calculated geographical distance is below a given minimum distance.

2. Method according to claim 1,
wherein given threshold of the semantic similarity index is at least 3/4.

3. Method according to claim 1 or 2,
wherein the accuracy of the distances is on a meter level.

4. Route planner or ticketing system with the functionality of the method according to any one of the preceding claims.
